# EUROPEAN PATENT APPLICATION

(11) **EP 2 031 541 A1**
(43) Date of publication of application: **04.03.2009**
(21) Application number: 08252027.1
(22) Date of filing: 12.06.2008
(51) Int. Cl.: G06F 21/24

(54) **Facility management system and control method of facility management system**

(30) Priority: 03.09.2007 KR 20070089093; 12.09.2007 KR 20070092685
(71) Applicant: LG Electronics Inc., Yongdungpo-gu Seoul (KR)
(72) Inventor: Nho, Gwon Moon, Changwon-si, Kyungsangnam 641-110 (KR); Kim, Young Hyoug, Changwon-si, Kyungsangnam 641-110 (KR); Kim, Jong Wook, Changwon-si, Kyungsangnam 641-110 (KR)
(74) Representative: Palmer, Jonathan R.

(57) **Abstract**

A facility management system 100 and 200 and a control method thereof are provided. The system comprises: a plurality of facilities 141, 142, 146, and 147; and a remote controller 110 and 210 connected to the facilities via a network 163 and 261 and controlling operation settings of the plurality of facilities, wherein, when user authentication is performed, the remote controller implements a display screen 150 based on the facility managed by the user among the plurality of facilities. Accordingly, facilities which a user can manage on the display screen are obvious, thus enabling the user to easily control the facilities by the remote controller. Further, the facilities over which the user does not have the managerial authority cannot be manipulated, thus improving the management stability of the facilities.

## Description

The present invention relates to a facility management system and a control method of a facility management system, and more particularly, to a facility management system, which makes easier the management of a facility, and a control method of a facility management system.

Building managers manage a plurality of indoor units by a central control unit. While the building managers may manage all of the indoor units, each building manager may manage a different indoor unit from each other. By the way, even if the indoor units managed by the building managers are different, the central control unit displays all of the indoor units on the screen in the same way, and thus it is difficult for the building managers to check which indoor unit is the one they are in charge of among the displayed indoor units.

### SUMMARY OF THE INVENTION

It would be desirable to provide a facility management system, which makes easier the management of a facility, and a control method of a facility management system.

The present invention provides a facility management system, comprising: a plurality of facilities; and a remote controller connected to the facilities via a network and controlling operation settings of the plurality of facilities, wherein, when user authentication is performed, the remote controller implements a display screen based on the facility managed by the user among the plurality of facilities.

In accordance with another aspect of the present invention, there is provided a control method of a facility management system according to the present invention, which configures operation settings of a plurality of facilities, comprising the steps of: storing authentication information corresponding to a plurality of users and information of facilities respectively managed by the plurality of users among the plurality of facilities; receiving input of user authentication information; and if the inputted user authentication information matches with authentication information of one user among the stored user authentication information, implementing a display screen based on a list of facilities managed by the one user.

In the facility management system and the control method of the facility management system according to the present invention, facilities which a user can manage on the display screen are obvious, thus enabling the user to easily control the facilities by the remote controller. Further, the facilities which the user does not have the managerial authority over cannot be manipulated, thus improving the management stability of the facilities.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram illustrating the construction of a facility management system according to one embodiment of the present invention;
FIG. 2 is a block diagram illustrating in details the construction or a remote controller as shown in FIG. 1 and the flow of a control signal;
FIG. 3 is a block diagram illustrating the hierarchical structure of first, second, ···, eighth indoor units and first and second ventilators;
FIG. 4 is a sequential view showing a control flow of a control method of the facility management system as shown in FIG. 1;
FIG. 5 is an authentication information screen displayed on the display screen of FIG. 2;
FIG. 6 is a screen of facilities displayed on the display screen when authentication of a first user is performed and " basic control" is selected;
FIG. 7 is a screen displayed on the display screen when the icon of the first zone as shown in FIG. 6 is selected by double clicking;
FIG. 8 is a screen displayed on the display screen when the icon of the first group as shown in FIG. 7 is selected by double clicking;
FIG. 9 is a sequential view showing a control flow of a control method according to another embodiment of the facility management system as shown in FIG. 1;
FIG. 10 is a screen of the facilities displayed on the display screen when authentication of the first user is executed and " basic control" mode is selected;
FIG. 11 is a screen displayed on the display screen when the icon of the first zone as shown in FIG. 10 is selected by double clicking;
FIG. 12 is a screen displayed on the display screen when the icon of the first group as shown in FIG. 11 is selected by double clicking;
FIG. 13 is a screen displayed when " group" is selected instead of " zone" from the first pull-down menu as shown in FIG. 10;
FIG. 14 is a screen displayed when " unit" is selected instead of " zone" from the first pull-down menu as shown in FIG. 10; and
FIG. 15 is a block diagram illustrating the construction of a facility management system 200 according to another embodiment of the present invention.

### DETAILED DESCRIPTION OF THE PREFERRED EMBODIMENTS

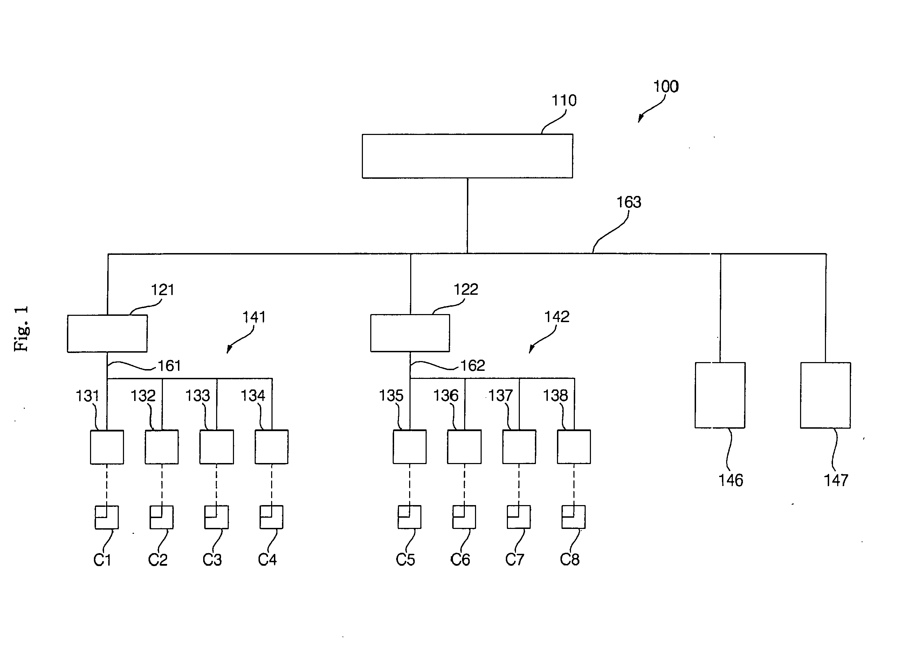

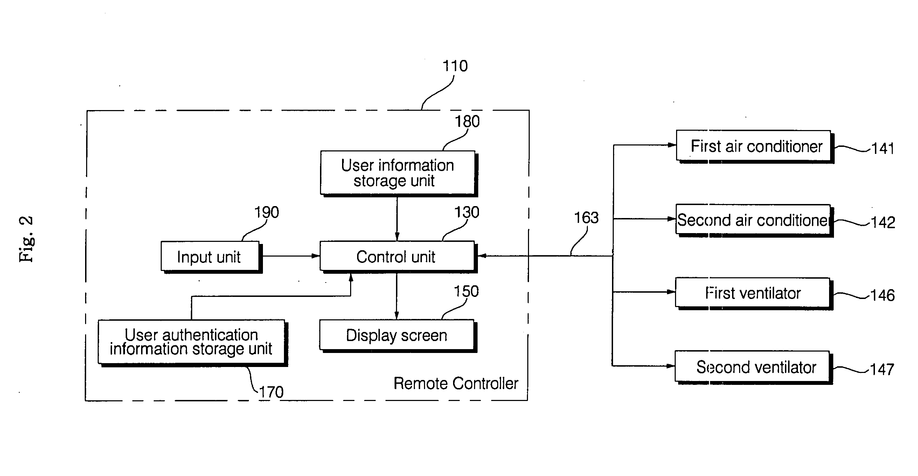

Referring to FIGs. 1 to 8, a facility management system according to one embodiment of the present invention will be described in detail. FIG. 1 is a block diagram illustrating the construction of a facility management system 100 according to one embodiment of the present invention. FIG. 2 is a block diagram illustrating in details the construction or a remote controller 110 as shown in FIG. 1 and the flow of a control signal.

Referring to FIG. 1, the facility management system 100 includes a first air conditioner 141, a second air conditioner 142, a first ventilator 146, a second ventilator 147, and a remote controller 110. The first air conditioner 141 includes a first outdoor unit 121 and first, second, third and fourth indoor units 131, 132, 133, and 134. The second air conditioner 142 includes a second outdoor unit 122 and fifth, sixth, seventh, and eighth indoor units 135, 136, 137, and 138. The first, second,···, eighth indoor units are disposed in indoor spaces, respectively, and the first and second outdoor units 121 and 122 are disposed in outdoor spaces. Facilities may include various kinds of facilities. That is, the facilities may include fire fighting facilities, electric facilities, automatic door facilities, etc. Also, an entire air conditioner may be defined as one facility, and each of the components of the air conditioner, i.e., an indoor unit, an outdoor unit, etc. may be defined as one facility. The following description will be made with respect to a case where each of the first, second, ···, eighth indoor units 131, 132,···, 138 is one facility. Besides, an entire ventilator may be defined as one facility, and one of the components of the ventilator may be defined as one facility. Therefore, the suction port, discharge port, or damper of each ventilator installed in an indoor space may be defined as one facility, respectively. The following description will be made with respect to a case where the first and second ventilators 146 and 147 are individual facilities.

In the first air conditioner 141, the first, second, third, and fourth indoor units 131, 132, 133, and 134 are communicatively connected with each other via a first network 161, and in the second air conditioner 142, the fifth, sixth, seventh, and eighth indoor units 135, 136, 137, and 138 are communicatively connected with each other via a second network 142. The outdoor unit 121, the second outdoor unit 122, the first ventilator 146, the second ventilator 147, and the remote controller 110 are communicatively connected with each other via a third network 163. Though RS-485 communication is conducted over the first network 161, second network 162, and third network 163, the present invention is not limited to the above communication method.

The first air conditioner 141 further includes first, second, third, and fourth local controllers C1, C2, C3, and C4 which perform communication with the first, second, third, and fourth indoor units 131, 132, 133, and 134 disposed in indoor spaces and. The first, second, third, and fourth local controllers C1, C2, C3, and C4 manipulate operation information of the first air conditioner 141 in communication with the first, second, third, and fourth indoor units 131, 132, 133, and 134. The first, second, third, and fourth local controllers C1, C2, C3, and C4 are provided with a plurality of operation keys (not shown), and a user controls the operation of the first air conditioner 141 by manipulating the plurality of operation keys (not shown). Further, the first, second, third, and fourth local controllers C1, C2, C3, and C4 further include a display panel (not shown) for displaying the operation information of the first air conditioner 141. The first, second, third, and fourth local controllers C1, C2, C3, and C4 and the first, second, third, and fourth indoor units 131, 132, 133, and 134 perform communication by wired or wireless means, and the first, second, third, and fourth local controllers C1, C2, C3, and C4 may be general wired remote controllers or wireless remote controllers. Also, similarly to the first air conditioner 141, the second air conditioner 142 includes fifth, sixth, seventh, and eighth local controllers C5, C6, C7, and C8. For the structure and operation of the fifth, sixth, seventh, and eighth local controllers C5, C6, C7, and C8, the structure and operation of the above-described first, second, third, and fourth local controllers C1, C2, C3, and C4 will be referred to.

Referring to FIG. 1, the remote controller 110 is communicatively connected with the first and second air conditioners 141 and 142 and the first and second ventilators 146 and 147, and controls the first and second air conditioners 141 and 142 independently from the first, second, ···, local controllers C1, C2, ···, C8. Also, the remote controller 110 is able to control setting information of the first, second, ···, local controllers C1, C2, ···, C8 and restrict some or all of the operational functions of the first, second, ···, local controllers C1, C2, ···, C8.

Referring to FIG. 2, the remote controller 110 includes a control unit 130, an input unit 190, a user information storage unit 180, a user authentication information storage unit 170, and a display screen 150. The user information storage unit 170 stores a list of facilities managed by each user. In this embodiment, a first user manages the first indoor unit 132, the second indoor unit 132, and the first ventilator 146, a second user manages the third indoor unit 133 and the fourth indoor unit 134, a third user manages the fifth indoor unit 135, the sixth indoor unit 136, and the second ventilator 147, a fifth user manages the seventh indoor unit 137 and the eighth indoor unit 138, and a fifth user manages the first, second, ···, eighth indoor units 131, 132, ···, 138 and the first and second ventilators 146 and 147.

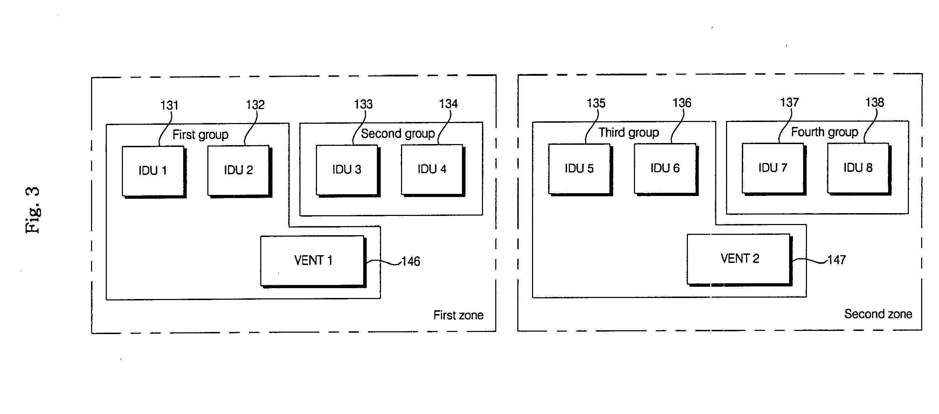

FIG. 3 is a block diagram illustrating the hierarchical structure of first, second, ···, eighth indoor units 131, 132, ···, 138 and first and second ventilators 146 and 147. Referring to FIG. 3, the first, second, ···, eighth indoor units 131, 132, ···, 138 and the first and second ventilators 146 and 147 are divided in a hierarchical structure. First, the first, second, ···, eighth indoor units 131, 132, ···, 138 and the first and second ventilators 146 and 147 are divided into a first zone and a second zone. The first zone includes the first, second, third, and fourth indoor units 131, 132, 133, and 134 and the first ventilator 146, and the second zone includes the fifth, sixth, seventh, and eighth indoor units 135, 136, 137, and 138 and the second ventilator 147. A specific indoor unit or ventilator can belong to a specific zone only. The first zone is divided into a first group and a second group. The first group includes the first indoor unit 131, the second indoor unit 132, and the first ventilator 146, and the second group includes the third indoor unit 133 and the fourth indoor unit 134. The second zone is also divided into a third group and a fourth group. The fourth group includes the fifth indoor unit 135, the sixth indoor unit 136, and the second ventilator 147, and the fourth group includes the seventh indoor unit 137 and the eighth indoor unit 138. Though these groups represent manipulation groups, they may represent schedule groups. Facilities belonging to the same manipulation group are controlled under the same operation settings. At this time, the users can control the operation of a specific manipulation group by changing not the operation settings of an individual facility but the operation settings of the specific manipulation group. Moreover, facilities belonging to the same schedule group are controlled according to the same schedule. At this time, the users can control the operation of a specific schedule group by changing not the operation schedule of an individual facility but the operation schedule of the specific schedule group. However, the users may differentiate the operation settings of the facilities in the same manipulation group or differentiate the operation schedule of the facilities in the same schedule group.

Referring to FIG. 2, the user authentication information storage unit 170 stores user authentication information. The user authentication information are IDs and passwords. The user authentication information storage unit 170 stores IDs and passwords of the first, second, third, fourth, and fifth users therein. The IDs and passwords of the users may be changed, added, or deleted by the users. However, the user authentication information is not limited to the foregoing description, but they may include various information, such as card key information, iris authentication information, voice authentication information, fingerprint authentication information and so forth.

Referring to FIG. 2, the input unit 120 receives input of a user' s operation information, setting information, authentication information and so on, and transmits an input signal to the control unit 130. The input unit 120 includes input keys (not shown) and a mouse (not shown) that have a physical structure. However, the input unit 120 may have a touch panel signal input structure for the convenience of manipulation and the simplification of the structure. The display screen 150 displays screen data corresponding to operation information of the first and second air conditioners 141 and 142 and the first and second ventilators 146 and 147 and setting information of the remote controller 110. The screen data are displayable in various forms, and include images, text, icons and so on. However, the forms of image data are not limited thereto.

Referring to FIG. 2, the control unit 130 implements a UI (user interface) screen on the display screen 150. However, a GUI screen may be implemented for the convenience of user manipulation. The control unit 130 receives input of authentication information from a user and performs an authentication procedure. After the authentication procedure, the control unit 130 receives input of an operation signal from the user, and controls the operation of the first and second air conditioners 141 and 142 and the first and second ventilators 146 and 147.

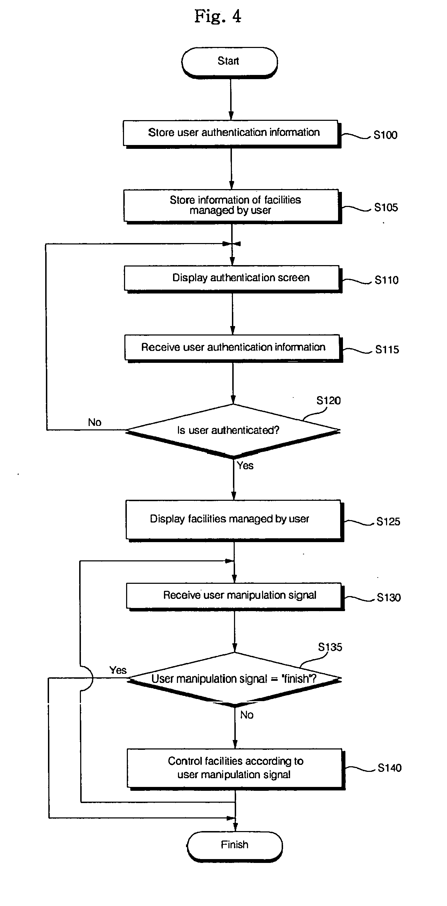

Referring to FIGs. 4 to 10, a control method of the facility management system 100 as shown in FIG. 1 will be described in detail.

FIG. 4 is a sequential view showing a control flow of a control method of the facility management system 100. Referring to FIG. 4, authentication information (IDs and passwords) of first, second, third, fourth, and fifth users are stored in the user authentication information storage unit 170 (S100). Then, information of the facilities managed by the first, second, third, fourth, and fifth users, respectively, are stored in the user information storage unit 180 (S105).

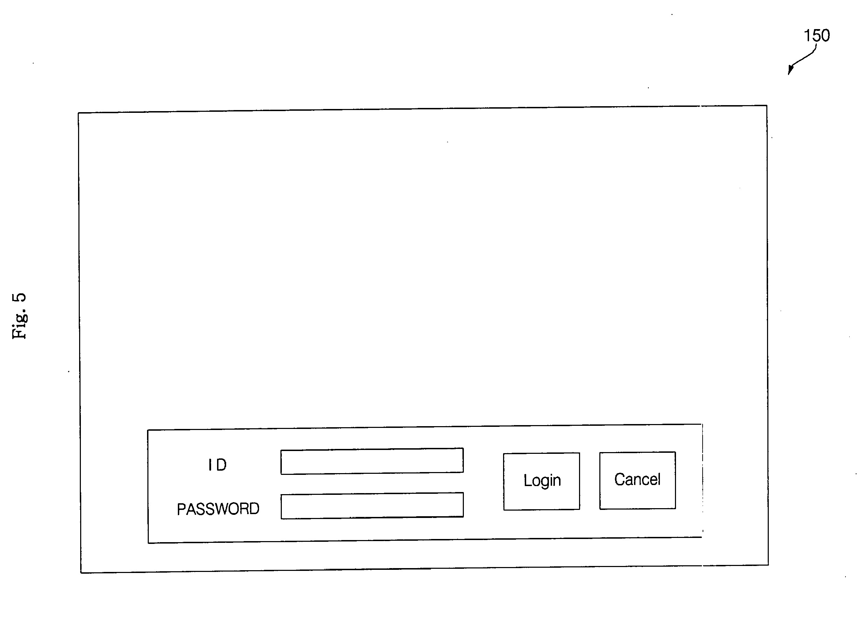

The user authentication information is displayed on the display screen 150 (S110). FIG. 5 illustrates an authentication information screen displayed on the display screen 150. Afterwards, an ID and a password are received from a user (S115). If the inputted ID and password do not match with any one of the stored IDs and passwords, the authentication information screen is displayed again (S110).

If user authentication information matches with any one of the stored user authentication information (S120), a user operation screen mode is executed. Thereafter, descriptions will be made under the assumption that authentication of the first user has been performed. In the operation screen mode, various types of operations can be performed. For example, " basic control" mode, " schedule" control mode, " history" view mode, " auto control" mode, " system" mode, " setting" mode, and so on can be performed. However, this invention is not limited thereto.

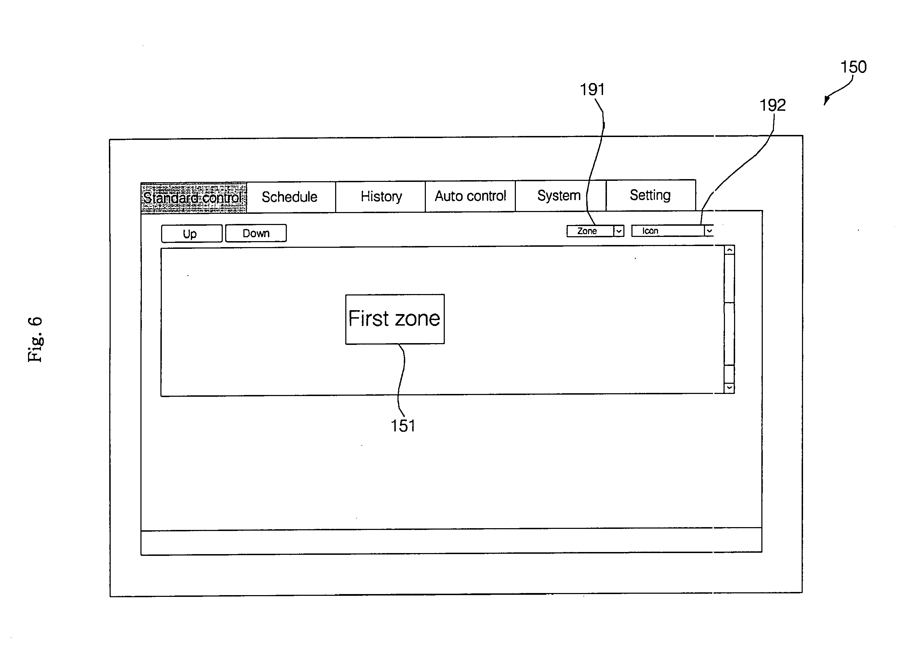

FIG. 6 shows the display screen 150 when authentication of the first user is performed and " basic control" is selected. Also, the display screen 150 of FIG. 6 shows a state in which " zone" is selected from a first pull-down menu 191 and " icon" is selected from a second pull-down menu 192 in the " basic control" mode. As discussed above, the first user manages the first indoor unit 131, the second indoor unit 132, and the first ventilator 146, and the first indoor unit 131, the second indoor unit 132, and the first ventilator 146 are all included in the first zone. On the display screen 150, only the icon 151 of the first zone including the facilities managed by the first user is displayed (S125). On the display screen 150, the icon 151 of the first zone is capable of receiving input of manipulation signals by a user. However, only some of manipulation signals from the first user are valid because the first user does not manage all of the facilities of the first zone. On the contrary, the second zone that does not include at least one of the first indoor unit 131, the second indoor unit 132, and the first ventilator 146 is not displayed. Thus, the first user can clearly check the items of facilities managed by himself or herself. Also, the first user cannot enter a manipulation signal into the facilities that are not managed by himself or herself, thereby fundamentally preventing a manager with no authority from manipulating the facilities at his or her discretion.

Under the condition that " icon" is selected from the second pull-down menu 192, the display screen 150 of FIG. 6 is displayed. The first user can move the position of the icon 151 of the first zone or modify the name of the icon 151 of the first zone. However, if the user selects " text" from the second pull-down menu 192, text corresponding to each facility can be displayed. The text may include the name of the facility, the name of an indoor space where the facility is installed, and so forth.

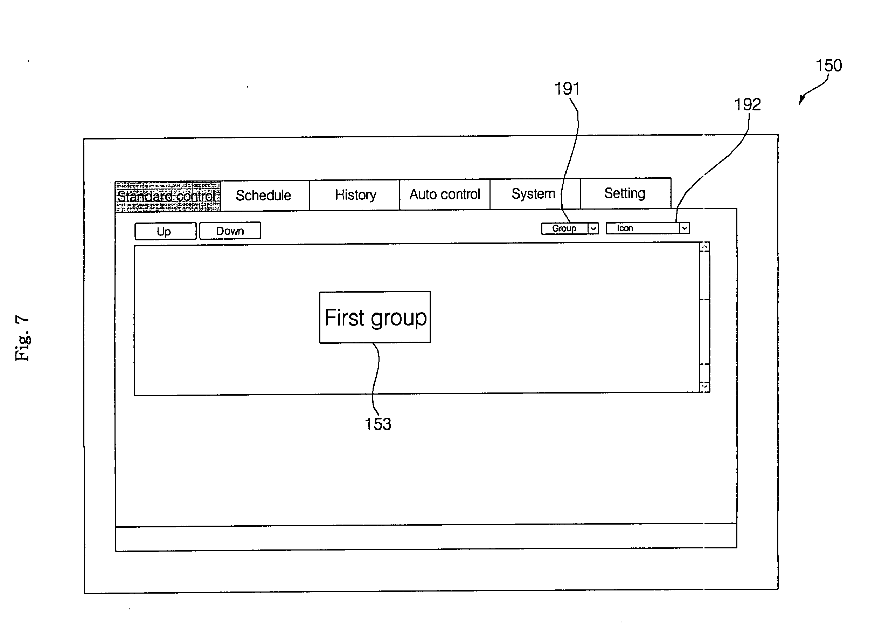

When the first user selects the icon 151 of the first zone of FIG. 6 by double clicking, the display screen 150 of FIG. 7 appears. Referring to FIG. 7, among the icon 153 of the first group and the icon (not shown) of the second group that are included in the first zone, only the icon 153 of the first group including the facilities managed by the first user is displayed. The first user can enter a manipulation signal in the icon 153 of the first group and perform the same operation settings for all of the facilities of the first group because the first user has the authority of managing all the facilities included in the first group. Also, if the first user selects " group" , instead of " zone" , from the first pull-down menu 191 of the display screen 190 of FIG. 6, the display screen 150 as shown in FIG. 7 may be displayed as it is.

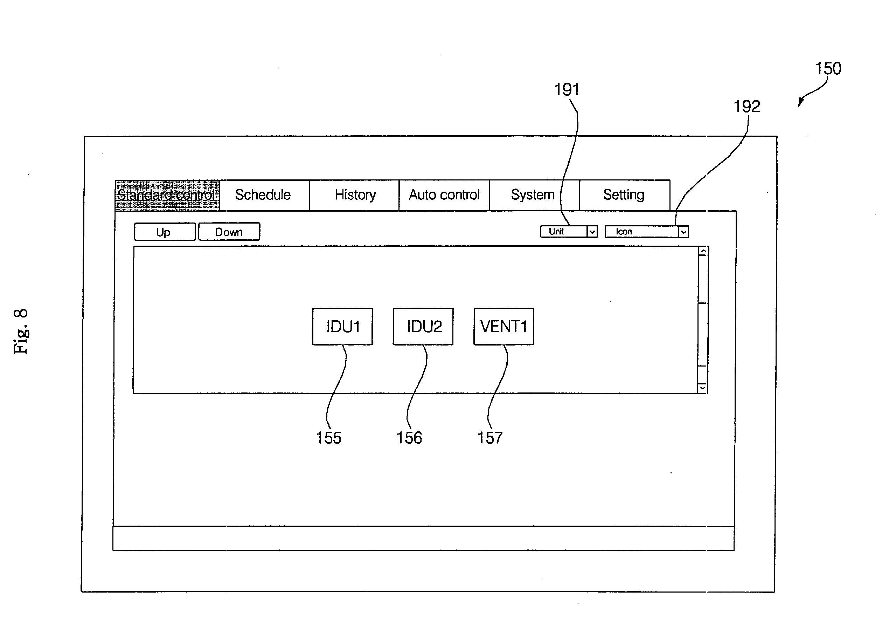

If the first user selects the icon 153 of the first group of FIG. 7 by double clicking, the display screen 150 of FIG. 8 is displayed. In FIG. 8, the icons of the facilities managed by the first user, i.e., the icons 155 and 156 of the first and second indoor units 131 and 132 and the icon 157 of the first ventilator, are all activated and displayed. The first user can control the first and second indoor units 131 and 132 and the first ventilator 146 by entering manipulation signals in the icons 155 and 156 of the first and second indoor units 131 and 132 and the icon 157 of the first ventilator, respectively. The manipulation signals include room set temperature information, wind direction information, and air volume information of the first and second indoor units 131 and 132 and operation/stop information of the first ventilator 146. Also, if the first user selects " group" , instead of " zone" , from the first pull-down menu of the display screen 190 of FIG. 6, the display screen 150 as shown in FIG. 7 may be displayed as it is.

Moreover, on the display screen 150, setting information that can be manipulated by the first user may be activated and displayed, while setting information that cannot be manipulated by the first user may be deactivated and displayed, or not be displayed. In other words, the icons or text indicating the room set temperature information and wind direction information of the first and second indoor units 131 and 132 may be activated to thus enable input of a manipulation signal, while the icon or text indicating the air volume information thereof may be deactivated to thus disable input of a manipulation signal, or not be displayed. However, on the display screen 150, only the setting information that can be managed by the first user may be activated and displayed. That is, the first user is able to clearly check the authority for manipulation on the display screen 150, and does not need to fundamentally manipulate the setting information over which the first user has no authority for manipulation.

When a manipulation signal is received from a user (S130), it is judged whether the user' s manipulation signal is a " finish" signal or not (S135). The " finish" signal may be a logout signal or a signal for finishing the displays screen 150. If the user' s manipulation signal is not the " finish" signal, the facilities are controlled according to the manipulation signal (S140).

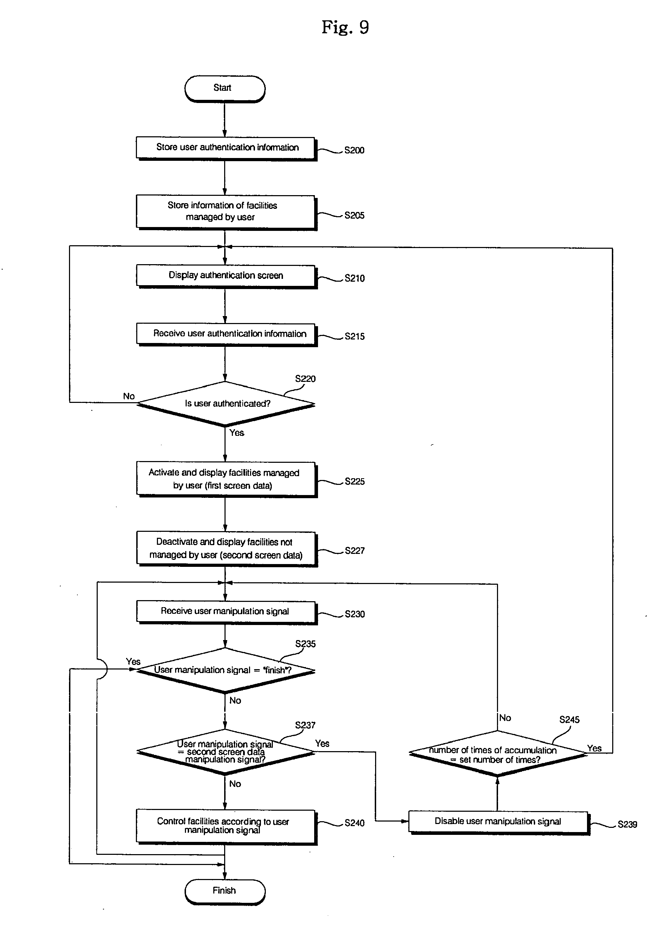

Referring to FIGs. 9 to 14, a control method according to another embodiment of the facility management system 100 as shown in FIG. 1 will be described in detail. The same reference numerals as those in the previous embodiment denote the same members.

FIG. 9 is a sequential view showing a control flow of a control method of the facility management system 100. Referring to FIG. 9, authentication information (IDs and passwords) of first, second, third, fourth, and fifth users are stored in the user authentication information storage unit 170 (S200). Then, information of the facilities managed by the first, second, third, fourth, and fifth users, respectively, are stored in the user information storage unit 180 (S205).

The user authentication information is displayed on the display screen 150 (S210). An authentication information screen is similar to the authentication information screen displayed on the display screen 150 of FIG. 5, so it will be omitted here. Afterwards, an ID and a password are received from a user (S215). If the inputted ID and password do not match with any one of the stored IDs and passwords, the authentication information screen is displayed again (S210).

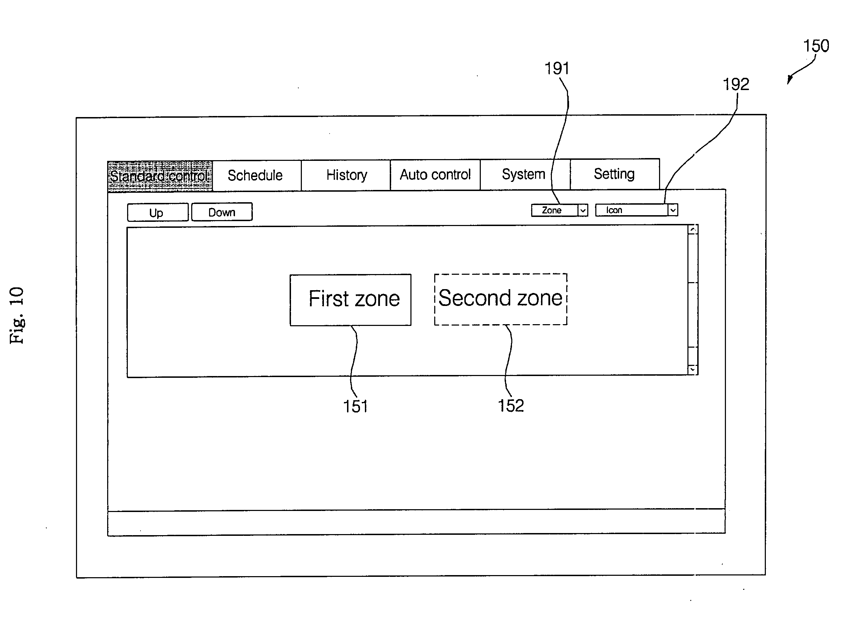

If user authentication information matches with any one of the stored user authentication information (S220), a user operation screen mode is executed. Thereafter, descriptions will be made under the assumption that authentication of the first user has been performed. FIG. 10 shows the display screen 150 when authentication of the first user is executed and " basic control" is selected.

FIG. 10 shows the display screen 150 when authentication of the first user is performed and " basic control" is selected. Also, the display screen 150 of FIG. 6 shows a state in which " zone" is selected from a first pull-down menu 191 and " icon" is selected from a second pull-down menu 192 in the " basic control" mode. As discussed above, the first user manages the first indoor unit 131, the second indoor unit 132, and the first ventilator 146, and the first indoor unit 131, the second indoor unit 132, and the first ventilator 146 are all included in the first zone. On the display screen 150, the icon 151 of the first zone including the facilities managed by the first user is displayed in solid line, and the icon 152 of the second zone is displayed in dotted line. On the display screen 150, the icon in solid line is capable of receiving input of manipulation signals by a user, while the icon in dotted line is incapable of receiving input of manipulation signals by a user. That is, the icon 151 of the first zone is activated and displayed (S225), and the icon 152 of the second zone is deactivated and displayed (S227). Therefore, it is apparent that the first user can enter a manipulation signal for the first zone but cannot enter a manipulation signal for the second zone. However, only some of manipulation signals from the first user are valid because the first user does not manage all of the facilities of the first zone.

Under the condition that " icon" is selected from the second pull-down menu 192, the display screen 150 of FIG. 10 is displayed. The first user can move the position of the icon 151 of the first zone or modify the name of the icon 151 of the first zone. However, if the user selects " text" from the second pull-down menu 192, text corresponding to each facility can be displayed. The text may include the name of the facility, the name of an indoor space where the facility is installed, and so forth.

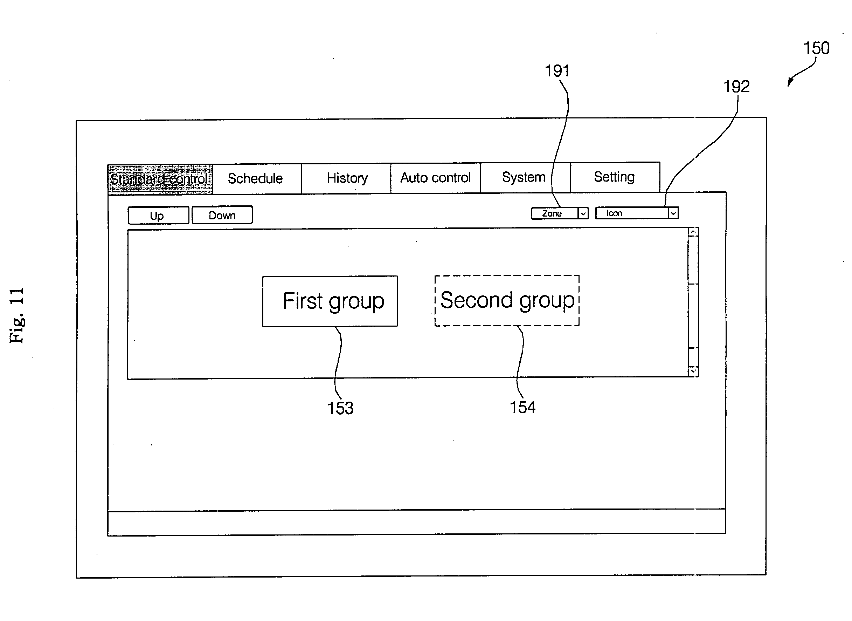

When the first user selects the icon 151 of the first zone of FIG. 10 by double clicking, the display screen 150 of FIG. 11 appears. Referring to FIG. 11, the icon 153 of the first group and the second group of the icon 154 that are included in the first zone are displayed. While the icon 153 of the first group including the facilities managed by the first user is activated, the icon 154 of the second group not including the facilities managed by the first user is deactivated. The first user can enter a manipulation signal in the icon 153 of the first group and perform the same operation settings for all of the facilities of the first group because the first user has the authority of managing all the facilities included in the first group.

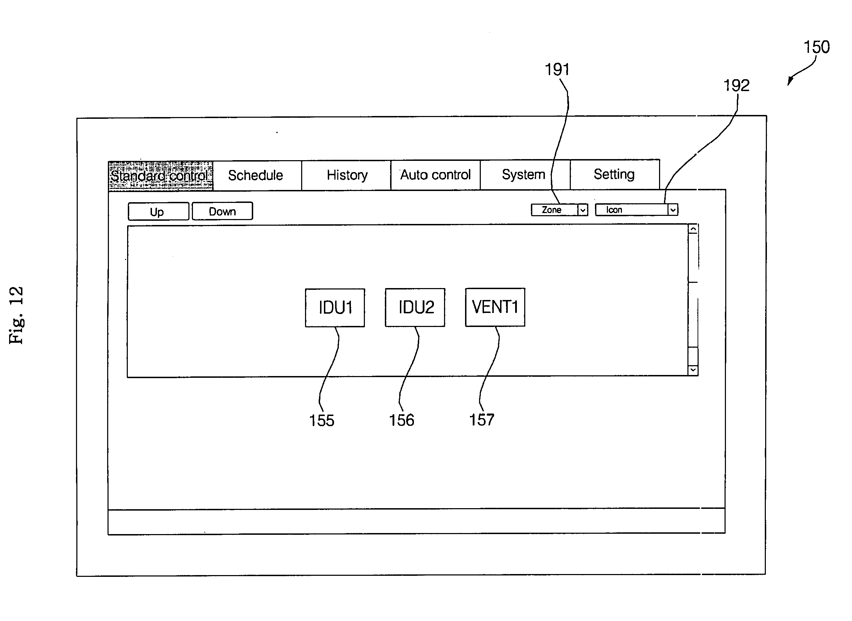

If the first user selects the icon 153 of the first group of FIG. 11 by double clicking, the display screen 150 of FIG. 12 is displayed. In FIG. 12, the icons of the facilities managed by the first user, i.e., the icons 155 and 156 of the first and second indoor units 131 and 132 and the icon 157 of the first ventilator, are all activated and displayed. The first user can control the first and second indoor units 131 and 132 and the first ventilator 146 by entering manipulation signals in the icons 155 and 156 of the first and second indoor units 131 and 132 and the icon 157 of the first ventilator, respectively. The manipulation signals include room set temperature information, wind direction information, and air volume information of the first and second indoor units 131 and 132 and operation/stop information of the first ventilator 146.

Moreover, on the display screen 150, setting information that can be manipulated by the first user may be activated and displayed, while setting information that cannot be manipulated by the first user may be deactivated and displayed. In other words, the icons or text indicating the room set temperature information and wind direction information of the first and second indoor units 131 and 132 may be deactivated to thus enable input of a manipulation signal, while the icon or text indicating the air volume information thereof may be deactivated to thus disable input of a manipulation signal.

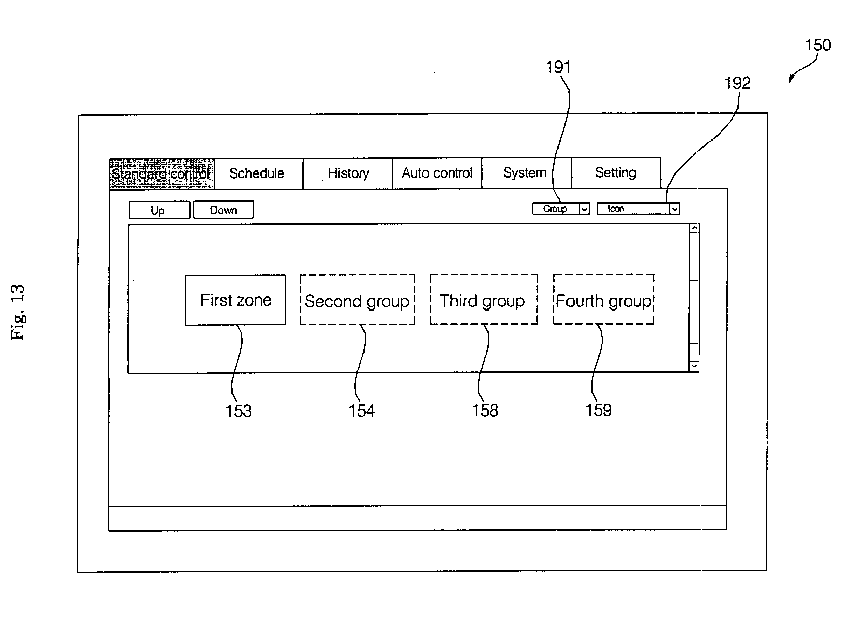

FIG. 13 illustrates a screen on which " group" is selected instead of " zone" from the first pull-down menu 191 of the displays screen of FIG. 12. Referring to FIG. 13, the icons of all the groups are displayed. The icon 153 of the first group is activated, and the icon 154 of the second group, the icon 158 of the third group, and the icon 159 of the fourth group are deactivated. That is, only the icon 151 of the first zone including the facilities managed by the first user is displayed. Accordingly, the first user is able to clearly understand which group of the facilities he or she can manipulate, thus enabling the first user to easily perform operational manipulations.

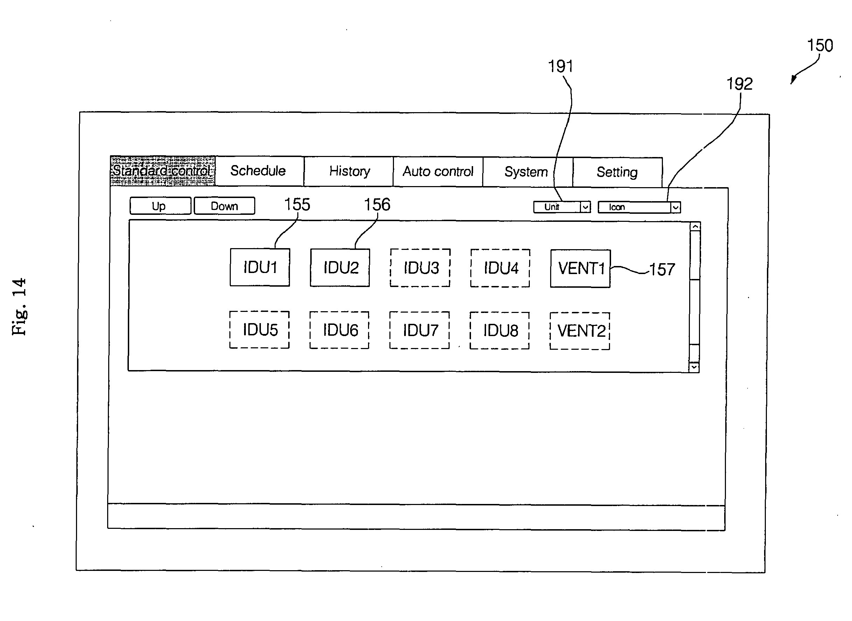

Additionally, FIG. 14 illustrates a screen on which " unit" is selected instead of " zone" from the first pull-down menu 191 of the display screen of FIG. 10. Referring to FIG. 14, the icons of all the facilities are displayed. Only the icons of the facilities managed by the first user are activated, and the icons of the other facilities are deactivated.

When a manipulation signal is received from a user (S230), it is judged whether the user' s manipulation signal is a " finish" signal or not (S235). The " finish" signal may be a logout signal or a signal for finishing the displays screen 150. If the user' s manipulation signal is not the " finish" signal, it is judged whether the user' s manipulation signal is a signal to be inputted into the deactivated icons. In other words, if the first user wants to enter a manipulation signal by double clicking the icon 152 of the second zone of FIG. 10 or the icon 154 of the second group of FIG. 11 which he or she has no managerial authority over, the user' s manipulation signal is invalidated (S239). Further, the number of times that the first user enters an invalid manipulation signal in the icon 152 of the second zone or the icon 154 of the second group is accumulated. If the number of times of accumulation is more than a set number of times (S245), the authentication screen is displayed again (S210) to request for an authentication procedure. However, if the user' s manipulation signal is not a signal to be inputted into the deactivated icons, the facilities are controlled according to the manipulation signal (S240).

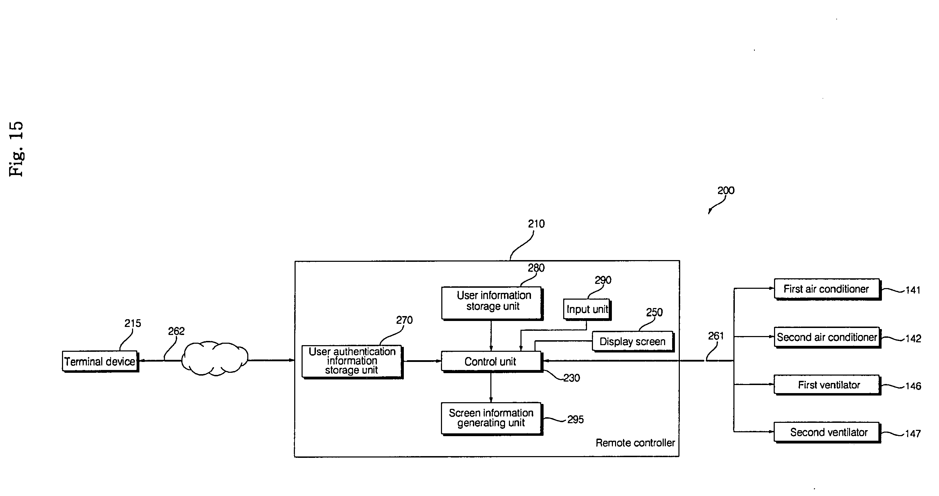

FIG. 15 is a block diagram illustrating the construction of a facility management system 200 according to another embodiment of the present invention. The following descriptions are focused on differences from the previous embodiment. The same reference numerals as those in the previous embodiment denote the same members.

Referring to FIG. 15, the facility management system 200 includes a first air conditioner 141, a second air conditioner 142, a first ventilator 146, a second ventilator 147, a remote controller 210, and a terminal device 215. Detailed descriptions of the first air conditioner 141, the second air conditioner 142, the first ventilator 146, and the second ventilator 147 will be omitted.

The remote controller 210 is connected to the first air conditioner 141, the second air conditioner 142, the first ventilator 146, and the second ventilator 147 via a first network 261. RS-485 communication is conducted over the first network 61. The remote controller 210 includes a control unit 230, an input unit 290, a user information storage unit 280, a user authentication information storage unit 270, a screen information generating unit 295, and a display screen 250. The user information storage unit 270 stores a list of facilities managed by each user. The list of facilities managed by the first to fifth users is the same as that in the previous embodiment. Also, the division by zone and division by group of the first air conditioner 141, second air conditioner 142, first ventilator 146, and second ventilator 147 are the same as those in the previous embodiment (see FIG. 3).

The user authentication information storage unit 270 stores user authentication information. The user authentication information are IDs and passwords. The input unit 220 receives input of a user' s operation information, setting information, authentication information and so on, and transmits an input signal to the control unit 230. The input unit 220 includes input keys (not shown) and a mouse (not shown) that have a physical structure. However, the input unit 220 may have a touch panel signal input structure for the convenience of manipulation and the simplification of the structure. The display screen 250 displays setting information, such as the IP address of the remote controller 210 or the like. However, the display screen 250 may display screen data corresponding to operation information of the first and second air conditioners 141 and 142 and the first and second ventilators 146 and 147 and setting information of the remote controller 210.

The control unit 230 implements a UI (user interface) screen on the display screen 250. At this time, the control unit 230 may implement a GUI screen on the display screen 250 for the convenience of user manipulation. The control unit 230 receives input of authentication information from a user and performs an authentication procedure. After the authentication procedure, the control unit 230 receives input of an operation signal from the user, and controls the operation of the first and second air conditioners 141 and 142 and the first and second ventilators 146 and 147.

The screen information generating unit 295 generates first screen information for receiving input of user authentication information and second screen information about facilities. The forms of the first screen information and the second screen information may be selected in various ways. In this embodiment, the remote controller 210 functions as a web server. Therefore, when there is a web access from the outside to the remote controller 210, the screen information generating unit 295 generates the first screen information and the second screen information in a web page form.

The remote controller 210 is communicatively connected to the terminal deice 215 via a second network. The second network 262 is the Internet network, and the terminal device 215 makes a web access to the remote controller 210. The terminal device 215 accesses the Internet network by executing the web browser, and may include various devices, such as a computer, a mobile phone, a PDA, etc.

Hereinafter, a control method of the facility management system 200 will be described in detail. First, when a user executes the web browser on the screen of the terminal device 215 and then enters the IP address of the remote controller 210 in the address field of the web browser, the terminal device 215 makes a web access to the remote controller 210. The screen information generating unit 295 sends first screen information requesting input of authentication information to the terminal device 215. The first screen information displayed on the screen of the terminal device 215 is similar to the screen as shown in FIG. 5. When the user enters authentication information of a first user by using the terminal device 215, the remote controller 210 generates second screen information having information about facilities, and sends the second screen information to the terminal device 215 via the second network 262. The second screen information displayed on the screen of the terminal device 215 is similar to the screens as shown in FIGs. 5 to 8. That is to say, on the screen of the terminal device 215, the icons 155, 156, and 157 of the facilities (first indoor unit 131, second indoor unit 132, and first ventilator 146) managed by the first user, or only the icon 153 of the first group or the icon 151 of the first zone that include the above facilities are activated and displayed so as to be operable, and the icons of the other facilities are not displayed. Details of the second screen information will be described with reference to the previous embodiment because they are similar to those of the previous embodiment.

Hereinafter, another control method of the facility management system 200 will be described in detail. First, when a user executes the web browser on the screen of the terminal device 215 and then enters the IP address of the remote controller 210 in the address field of the web browser, the terminal device 215 makes a web access to the remote controller 210. The screen information generating unit 295 sends first screen information requesting input of authentication information to the terminal device 215. The first screen information displayed on the screen of the terminal device 215 is similar to the screen as shown in FIG. 5. When the user enters authentication information of a first user by using the terminal device 215, the remote controller 210 generates second screen information having information about facilities, and sends the second screen information to the terminal device 215 via the second network 262. The second screen information displayed on the screen of the terminal device 215 is similar to the screens as shown in FIGs. 9 to 14. That is to say, on the screen of the terminal device 215, the icons 155, 156, and 157 of the facilities (first indoor unit 131, second indoor unit 132, and first ventilator 146) managed by the first user, or only the icon 153 of the first group or the icon 151 of the first zone that include the above facilities are activated and displayed so as to be operable, and the icons of the other facilities are deactivated and displayed so as to be inoperable. Details of the second screen information will be described with reference to the previous embodiment because they are similar to those of the previous embodiment.

As discussed above, even when a user controls the operation of the facilities by communicatively connecting to the remote controller 210 by using the terminal device 215, the user can clearly check only the facilities managed by himself or herself, thereby enabling the user to easily manipulate the facilities.

Although the present invention has been described with reference to the embodiments shown in the drawings, these are merely illustrative, and those skilled in the art will understand that various modifications and equivalent other embodiments of the present invention are possible.

## Claims

1. A facility management system (100, 200), comprising:
a plurality of facilities (141, 142, 147); and
a remote controller (110, 210) connected to the facilities via a network (163, 261) and configuring operation settings of the plurality of facilities,
wherein, when user authentication is performed, the remote controller implements a display screen (150) based on the facility managed by the user among the plurality of facilities.

2. The facility management system of claim 1, wherein the remote controller includes:
a user information storage unit (180, 280) for storing authentication information corresponding to a plurality of users and lists of facilities respectively managed by the plurality of users among the plurality of facilities; and
a control unit (130, 230) for, if user information inputted through an input unit (190, 290) matches with authentication information of one user among the stored user authentication information, implementing a display screen based on a list of facilities managed by the one user.

3. The facility management system of claim 2, wherein the control unit activates first image information and displays first screen information for receiving input of user authentication information and screen data corresponding to the facilities managed by the one user so as to be operable, and deactivates and displays screen data corresponding to the other facilities so as to be inoperable.

4. The facility management system of claim 3, wherein the control unit displays the first screen information and the second screen information on the display screen.

5. The facility management system of claim 3, further comprising a terminal device (215) which displays the first screen information transmitted from the remote controller, and if inputted user information matches with authentication information of one user among the stored user authentication information, receiving the second screen information from the remote controller and displaying the second screen information.

6. The facility management system of claim 2, wherein the control unit generates:
first screen information for receiving input of user authentication information; and
second screen information for displaying only screen data corresponding to the facilities managed by the one user.

7. The facility management system of claim 6, wherein the control unit displays the first screen information and the second screen information on the display screen.

8. The facility management system of claim 6, further comprising a terminal device (215) which displays the first screen information transmitted from the remote controller, and if inputted user information matches with authentication information of one user among the stored user authentication information, receiving the second screen information from the remote controller and displaying the second screen information.

9. The facility management system of claim 3 or 6, wherein the plurality of facilities include indoor units (131, 132, 133, 134, 135, 136, 137, 138), respectively,
the indoor units are divided into a plurality of groups, and
the screen data are text or icons (155, 156) corresponding to the indoor units or the groups including the indoor units.

10. The facility management system of claim 3 or 6, wherein the plurality of facilities include indoor units, respectively,
the indoor units are divided into a plurality of groups,
the plurality of groups are divided by a plurality of zones, and
the screen data are text or icons corresponding to the zones including the indoor units.

11. The facility management system of claim 4, wherein a user manipulation signal corresponding to the deactivated screen data is inputted more than a set number of times, the control unit displays the first screen information again on the display screen.

12. The facility management system of claim 5, wherein, if a user manipulation signal corresponding to the deactivated screen data is inputted more than a set number of times, the terminal device displays the first screen information again.

13. The facility management system of claim 5 or 8, wherein the remote controller and the terminal device are network-connected via the Internet network.

14. A control method of a facility management system (100, 200), which configures operation settings of a plurality of facilities (141, 142, 146, 147), comprising the steps of:
storing authentication information corresponding to a plurality of users and information of facilities respectively managed by the plurality of users among the plurality of facilities (S100, S200);
receiving input of user authentication information (S115, S215); and
if the inputted user authentication information matches with authentication information of one user among the stored user authentication information, implementing a display screen based on a list of facilities managed by the one user (S125, S225, S217).

15. The method of claim 14, wherein, in the step of implementing a display screen, screen data corresponding to the facilities managed by the one user among the plurality of facilities is activated and displayed so as to be operable, and screen data corresponding to the other facilities is deactivated and displayed so as to be inoperable.

16. The method of claim 15, further comprising the step of, if a user manipulation signal corresponding to the deactivated screen data is inputted more than a set number of times, displaying the screen for receiving input of user authentication (S110, S120, S210, S220).

17. The method of claim 14, wherein, in the step of implementing a display screen, only the screen data corresponding to the facilities managed by the one user among the plurality of facilities is displayed.
